# EUROPEAN PATENT APPLICATION

(11) **EP 1 329 828 A2**
(43) Date of publication of application: **23.07.2003**
(21) Application number: 02021958.0
(22) Date of filing: 30.09.2002
(51) Int. Cl.: G06F 17/60

(54) **Order processing method and system for commodities having dimensional specifications**

(30) Priority: 18.01.2002 JP 2002009826
(71) Applicant: JUKEN SANGYO CO., LTD., Hiroshima 738-8502 (JP)
(72) Inventor: Nakamoto, Yusho, Hatsukaichi-shi, Hiroshima 738-0054 (JP); Yoshio, Uemura, Hiroshima-shi, Hiroshima 731-5116 (JP); Kanbara, Takashi, Hatsukaichi-shi, Hiroshima 738-0017 (JP)
(74) Representative: Reichel, Wolfgang, Dipl.-Ing.

(57) **Abstract**

A server connected with a portable terminal via a network manages commodity data and quotation data in a database, sends the commodity data or the quotation data to a portable terminal and displays the commodity data or the quotation data on a screen in response to an inquiry from the portable terminal, and sends a sequence of ordering screens for commodities which have dimensional specifications to the portable terminal and displays the sequence of ordering screens on the screen at a request from the portable terminal, which in turn places orders by entering commodity specifications including dimensional specifications according to the displayed sequence of ordering screens.

## Description

### BACKGROUND OF THE INVENTION

### 1. Field of the Invention

This invention relates to an order processing method and system for commodities which have dimensional specifications, more particularly, to a simple order processing method and order processing system which allow orders to be placed for commodities according to specifications including dimensional specifications, by making it possible to actually measure materials on a building site and to place orders on the spot based on reliable dimensional specifications in housing construction in which dimensions for a large number of materials such as stairs, window frames, fencing, and piping must be specified individually for each construction item.

### 2. Description of the Related Art

Building material manufacturers do business with a large number of customers including distributors such as wholesalers and construction contractors such as builders on a routine basis. However, customer's orders are placed in various combinations and under various conditions in terms of types and sizes of building material, delivery times, places of delivery, etc., and thus it is a very complicated and troublesome task for the customers to prepare requisitions and for the building material manufacturers to prepare quotations. For example, the customers checks the types, dimensions, and installation methods of all necessary building materials and orders each type by specifying its dimensions, quantity, installation method, delivery time, and place of delivery. The building material manufacturers that receive the orders must secure the specified types of building material in the required quantities, cut building materials into specified dimensions, and deliver them to a specified building site on specified dates. Therefore, the building material manufacturers must estimate costs, working days, delivery methods, etc. by taking all the above into consideration.

Ordering systems which allow building materials to be ordered online from terminals have been available for some time (e.g., Japanese Patent Laid-Open No. 2001-167171). However, the ordering systems handle only order placement in a simple manner. Thus, in such systems, a customer who wants to order building materials must carry out various tasks separately. That is, the customer should learn details of the commodities (building materials) with reference to product catalogs, take out working drawings from a collection of working drawings, determine detail specifications based on the extracted working drawings, and prepare order data.

In this way, since conventional online ordering systems for building materials, in effect, handle only order placement processes, they do not make sufficient use of information and thus present the following problems.

Namely, after the customer sends design data or the like to a building material manufacturer to request a quotation, the customer often has to wait a long time for a quotation to be sent back, resulting in a delay in checking the quotation and placing an order, which in turn can result in a delayed delivery.

Also, when a customer is at a building site or elsewhere in the field, the customer may notice omissions in ordering or may need to place additional orders urgently due to design changes. In such a case, it is not possible to take prompt and reliable actions in the field because details of the original order are unknown or it is troublesome, time-consuming, and error-prone to check inventories or inquire about delivery time by telephone.

Furthermore, customers do not reuse information among themselves. Consequently, even if there were similar dealings in the past, customers must newly prepare quotation data and the building material manufacturer must prepare quotations with the same content repeatedly. This results in an inefficient system.

The most important thing in sales of building materials is how to deliver commodities just in time to a building site where situations are ever-changing. Thus, sales representatives at retail stores must carry out troublesome management tasks by themselves by preparing a control sheet for each site of customers, i.e., construction contractors, and entering the date of delivery from a manufacturer or wholesaler and expected date of delivery to the site for each item (flooring material, fixture, etc.).

Furthermore, when ordering building materials, most of dimensions are determined based on working drawings, but the purchaser must actually make checks and take measurements at the construction site because in the case of stairs and window frames, there may be subtle differences between drawings and actual construction or there may be details that cannot be seen from the drawings. For example, conventionally, at the time of ordering stairs, it is customary for the purchaser to measure rise, run, and width and then contact his/her office or a manufacturer by phone or order stairs after bringing back dimensional data to his/her office. Thus, in a case that an item must be arranged for in a hurry, contact is often made orally by phone. Consequently, stairs which cannot be installed are ordered in some cases due to mistakes made in conveying dimensional data, often resulting in a trouble at the time of delivery. Since stairs are generally shipped precut, when there is any such ordering mistake, it takes time to arrange for a replacement, often upsetting the schedule. Besides, delivery time is uncertain at the time of order placement.

Similarly, at the time of ordering window frames, it is general practice to pick out required quantities and dimensions from working drawings and then contact the manufacturer by phone or the like. However, dimensional differences between drawings and construction site are liable to cause ordering mistakes. As a result, window frames are cut incorrectly and delivered window frames cannot be installed at the site, which often occasions complaints about poor workmanship. This makes it necessary to check and measure designated mounting structures of window frames at the site before placing an order. However, there is a problem that the prices and delivery time of window frames cut to order are unknown at the site.

The challenge for the present invention is to allow customers to check details of previous orders or status of deliveries quickly at a site or anywhere in the field, place additional or urgent orders or arrange for urgent deliveries on the spot as required, place orders easily and accurately at the site for building materials such as stairs and window frames which require checks and detailed measurements at the site, and get quotation data including the prices and deliveries of the ordered commodities quickly.

### SUMMARY OF THE INVENTION

An object of the present invention is to provide an order processing method for commodities which makes it possible to take measurements at a site and place orders on the spot based on reliable dimension specifications.

Another object of the present invention is to provide an order processing system for commodities which makes it possible to take measurements at a site and place orders on the spot based on reliable dimension specifications.

To solve the above challenge, the present invention uses a portable terminal including a portable telephone as an access tool to allow a customer who place orders to access a server easily from any building site, allows the customer to easily reference in-stock commodity data and quotation data managed by the server, and makes it possible mainly for the customer to enter commodity order data including dimension specifications accurately on a sequence of ordering screens sent from the server to the portable terminal.

The present invention provides an order processing method for commodities with dimensional specifications. The method comprises managing commodity data and quotation data in a database at a server being connected with a portable terminal via a network, sending the commodity data or quotation data from the server to the portable terminal in response to an inquiry from the portable terminal to display the commodity data or quotation data on a screen of the portable terminal, sending a sequence of ordering screens for commodities which have dimensional specifications from the server to the portable terminal in response to a request from the portable terminal to display the sequence of ordering screens on the screen of the portable terminal, and placing orders by entering commodity specifications having dimensional specifications according to the sequence of ordering screens displayed on the screen of the portable terminal.

In the above described order processing method of the present invention, preferably the sequence of ordering screens for commodities which have dimensional specifications includes a setting screen for dimensional data.

In the above described order processing method of the present invention, preferably the server prepares quotation data and returns it to the portable terminal in real time by calculating delivery time and design prices based on the commodity specifications entered by the portable terminal on the ordering screens.

In the above described order processing method of the present invention, preferably the commodities with dimensional specifications are building materials.

In the above described order processing method of the present invention, preferably the building materials include stairs and window frames.

The present invention provides an order processing system which comprises a portable terminal having a screen, and a server being connected with the portable terminal via a network to receive an order for commodities with dimensional specifications from the portable terminal. The server further comprises means for sending in-stock commodity data or related first quotation data to a portable terminal in response to an inquiry from the portable terminal to display the in-stock commodity data or related first quotation data on the screen of the portable terminal, means for sending a sequence of ordering screens for commodities which have dimensional specifications to the portable terminal in response to a request from the portable terminal to display the sequence of ordering screens on the screen of the portable terminal, means for preparing second quotation data by calculating delivery time and design prices based on the commodity specifications having dimensional specifications entered by the portable terminal to return the second quotation data to the portable terminal in real time.

In the above described order processing system of the present invention, preferably the commodities with dimensional specifications are building materials.

In the above described order processing system of the present invention, preferably the building materials include stairs and window frames.

The present invention provides an order processing server for commodities with dimensional specifications. The server comprises means for sending commodity data or first quotation data to a portable terminal in response to an inquiry from the portable terminal to display the commodity data or first quotation data on a screen of the portable terminal, means for sending a sequence of ordering screens for commodities which have dimensional specifications to the portable terminal in response to a request from the portable terminal to display the sequence of ordering screens on the screen of the portable terminal, means for preparing second quotation data by calculating delivery time and design prices based on the commodity specifications having dimensional specifications entered by the portable terminal to return the second quotation data to the portable terminal in real time.

### BRIEF DESCRIPTION OF THE DRAWINGS

FIG. 1 is a schematic block diagram of an order processing system according to the present invention.
FIG. 2 is an outline flow of an order processing program according to the present invention.
FIG. 3 is an outline flow of a stair and window frame order processing program in an order processing server to which the present invention is applied.
FIG. 4 is a detailed flow of order processing performed between a portable terminal and server when stairs are ordered.
FIG. 5 is a detailed flow of order processing performed between the portable terminal and server when window frames are ordered.
FIG. 6 is an explanatory diagram illustrating an exemplary sequence (succession) of portable terminal screens operated in an order placement process for stairs.
FIG. 7 is an explanatory diagram illustrating an exemplary sequence (succession) of portable terminal screens operated in an order placement process for window frames.

### DETAILED DESCRIPTION OF THE PREFERRED EMBODIMENTS

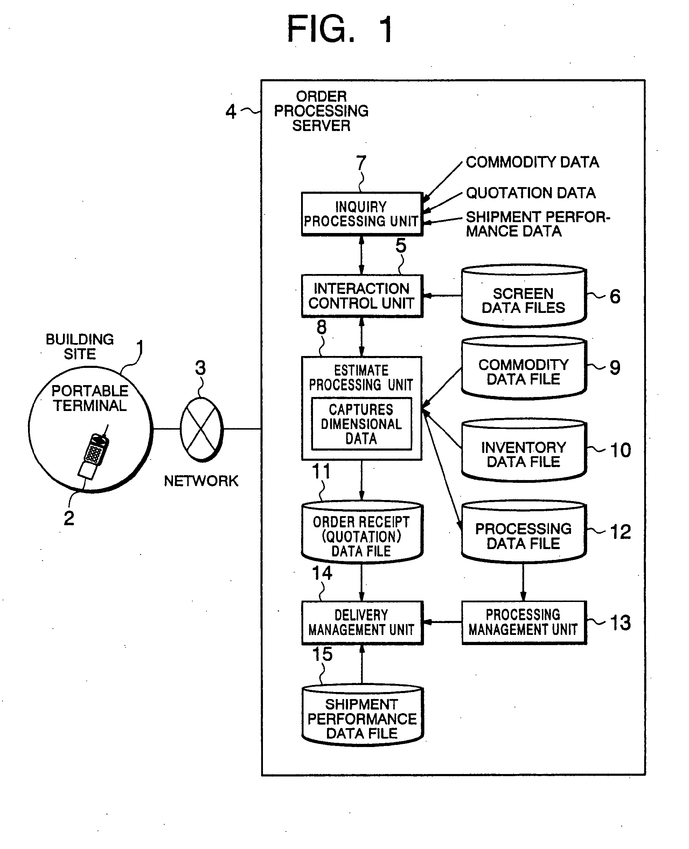

FIG. 1 illustrates an outline of an order processing system of the present invention for commodities with dimensional specifications.

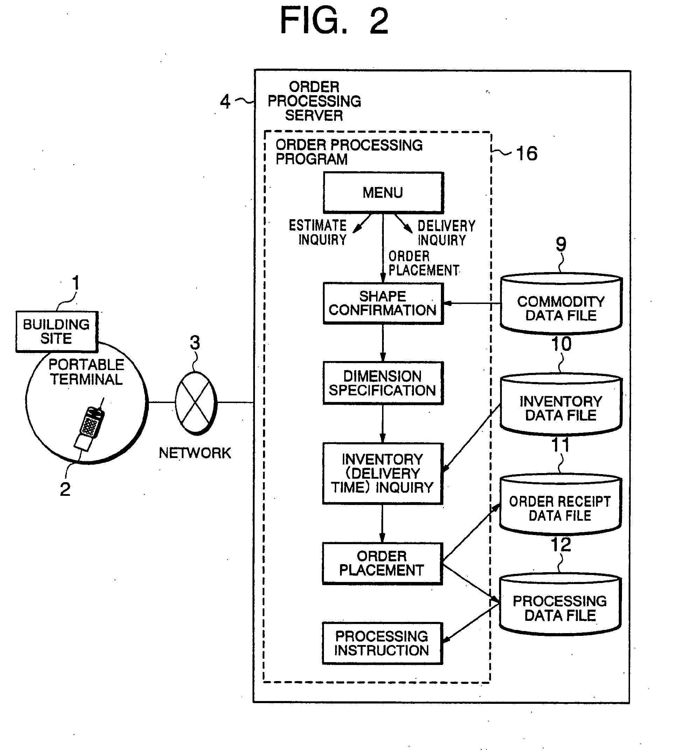

In FIG. 1, reference numeral 1 denotes a building site, reference numeral 2 denotes a portable terminal (or PDA; Personal Digital Assistant) including a portable phone carried by a customer such as construction contractors or by sales office staff, reference numeral 3 denotes a network, and reference numeral 4 denotes an order processing server of a building material manufacture. Reference numerals 5 to 15 denote components of a system which performs order processing. Reference numeral 5 denotes an interaction controller for interacting with the portable terminal 2. Reference numeral 6 denotes various screen data files of a menu screen, an inquiry screen, a reply screen, an input screen, a message screen, etc. used for interactions. Reference numeral 7 denotes an inquiry processor which answers inquiries about in-stock commodity or quotation data file, delivery status, etc. from the portable terminal 2. Reference numeral 8 denotes a quotation processor which prepares quotation data based on order specification data including dimensional data received from the portable terminal 2. Reference numeral 9 denotes a commodity data file which contains catalog information concerning dimensions, colors, and materials of individual commodities. Reference numeral 10 denotes an inventory data file which manages the in-stock amount and due-in of each commodity. Reference numeral 11 denotes an order receipt data file which contains quotation data finalized upon order placement. Reference numeral 12 denotes a processing data file which contains processing dimensions of commodities for which precutting or custom-cutting is specified at the time of order placement. Reference numeral 13 denotes a processing manager which gives and manages processing instructions based on the processing data file 12. Reference numeral 14 denotes a delivery manager which manages the delivery status of ordered commodities. Reference numeral 15 denotes a shipment performance data file which contains shipment status of ordered commodities. Functions of the interaction controller 5, inquiry processor 7, quotation processor 8, processing manager 13, and delivery manager 14, shown in FIG. 1 are implemented by an order processing program. In FIG. 2, the order processing program is denoted by reference numeral 16. Incidentally, the elements denoted by reference numerals 1 to 4 and 9 to 12 in FIG. 2 are identical to those denoted by the same reference numerals in FIG. 1.

Next, order processing according to the present invention will be described concretely with reference to FIGS. 1 and 2. First, the customer calls the order processing server 4 and logs on to it by operating the portable terminal 2. The interaction controller 5 of the server sends out screens to the portable terminal 2 beginning with the menu screen in an appropriate sequence according to the customer's operations using the screen data files 6. The customer selects Inventory Inquiry (Delivery Time Inquiry), Quotation Data Inquiry, Order Placement, Delivery Status Inquiry, or the like from the menu. FIG. 2 shows, in a dotted box, a basic flow of processes performed by the order processing program 16 when the portable terminal 2 places an order for commodities with dimensions specified. Incidentally, the server sends the portable terminal 2 interactive screens as well as minimum necessary programs for inputs or responses on the portable terminal each time the screen changes.

For example, in a case that Inventory Inquiry (Delivery Time Inquiry) is selected, the inquiry processor 7 of the server searches the inventory data file 10 of a given commodity using an item number as a key and displays the results on the screen of the portable terminal 2. Also, in a case that there is an inquiry about the delivery time of the commodity, the inquiry processor answers about the delivery time. In a case that the commodity is out of stock or in short supply, the inquiry processor can estimate delivery time and give an answer by checking goods receipts schedule. The customer carrying the portable terminal 2 prepares quotation data with reference to the reply screen for inventory inquiry, and then places an order if possible. Consequently, the quotation processor 8 of the server manages the quotation data prepared by the customer, in the order receipt data file 11.

In a case that the customer wants to check order details or place an additional order, the customer selects Quotation Data Inquiry from the menu. The inquiry processor 7 retrieves necessary quotation data from the order receipt data (quotation) file 11 based on an ID of the customer and sends a reply to the screen of the portable terminal 2. The customer checks the quotation data displayed on the screen of the portable terminal 2 and can order additional materials based on it.

In a case that it becomes necessary for the customer to check for delivery of materials at a building site, the customer selects Delivery Status Inquiry. With reference to the order receipt data file 11 which manages data about orders received by the manufacturer and the shipment performance data file 15 which manages delivery status, the inquiry processor 7 returns information such as Delivered/Yet To Be Delivered or delivery schedule to the inquiry screen of the portable terminal 2.

For example, when ordering a commodity which requires dimensional specifications such as a stair and a window frame, the customer goes to the building site 1, checks how mounting structures for stairs or window frames have been constructed and places an order using the portable terminal 2. The interaction controller 5 of the server sends a sequence of ordering screens to the portable terminal 2 to allow the customer to prepare quotation data by simple operations.

When placing an order at the site by checking specifications and specifying dimensions, the customer prepares quotation data according to the flow in FIG. 2 as follows. That is, the customer inquires commodity data from the server using the sequence of ordering screens on the portable terminal and works out order specifications of detailed shapes by actually checking the mounting locations/structures of the stairs or window frames. In so doing, the customer can specify dimensions for precutting or custom-cutting by actually measuring them. Next, the customer inquires of the server about the inventory and delivery time of the commodities with specified specifications. In response, the quotation processor 8 of the server calculates the price and delivery time of the stairs or window frames to be precut or custom-cut and sends a reply to the screen of the portable terminal 2. When the reply from the server is satisfactory, the user places an order. The quotation processor 8 of the server manages the quotation data of the ordered commodities as order receipt data and records the dimensional data as processing data. The processing manager 13 of the server prepares and outputs a processing instruction for precutting or custom-cutting based on the processing data.

Now, a preferred embodiment of the present invention will be described. First, programmed processes of the order processing server will be outlined.

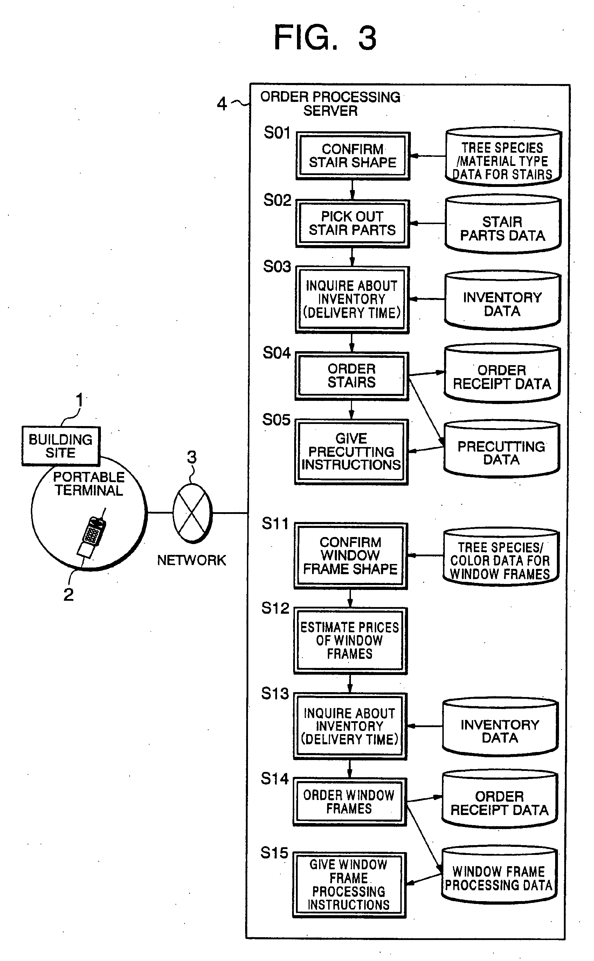

FIG. 3 shows an outline flow of a stair and window frame order processing program in an order processing server to which the present invention is applied. In the drawing, S01 to S05 are steps in a stair ordering process and S11 to S15 are steps in a window frame ordering process. Major processes for ordering stairs and window frames will be outlined below according to these steps.

First, ordering of stairs will be outlined. S01: At a request from a portable terminal of the customer who has confirmed the shape of the stairs to be installed based on the condition of the mounting location of the stairs at the building site, the server sends commodity data and captures order specification data including the shape, tree species, and material type of stairs selected and specified by the customer on the screen of the portable terminal.

S02: Then, the server makes the customer pick out individual parts composing the stairs with reference to the commodity data, captures precutting dimensions measured and specified at the site, and estimates prices.

S03: In response to an inventory inquiry from the portable terminal concerning the extracted stair parts, the server checks inventory availability and delivery time with reference to inventory data and gives an answer.

S04: In a case that quotation data of the stairs satisfies the customer and an order is placed, the server substitutes the quotation data with order receipt data and retains the specified precutting dimensions as precutting data.

S05: The server reads out the precutting data and gives precutting instructions of the stairs.

Next, ordering of window frames will be outlined. S11: At a request from a portable terminal of the customer who has confirmed the shapes of the window frames to be installed based on the condition of the mounting locations of the window frames at the building site, the server sends commodity data and captures order specification data including the shape, tree species, and color of window frames selected and specified by the customer on the screen of the portable terminal. It also captures processing dimensions measured at the site and specified by the customer.

S12: Based on the captured data, the server estimates the prices of the window frames.

S13: In response to an inventory (delivery time) inquiry, the server checks inventory availability and delivery time with reference to inventory data and gives an answer.

S14: In response to an order placed for the window frames, the server substitutes the quotation data with order receipt data and retains the specified processing dimensions as window frame processing data.

S15: The server reads out the window frame processing data and gives window frame processing instructions.

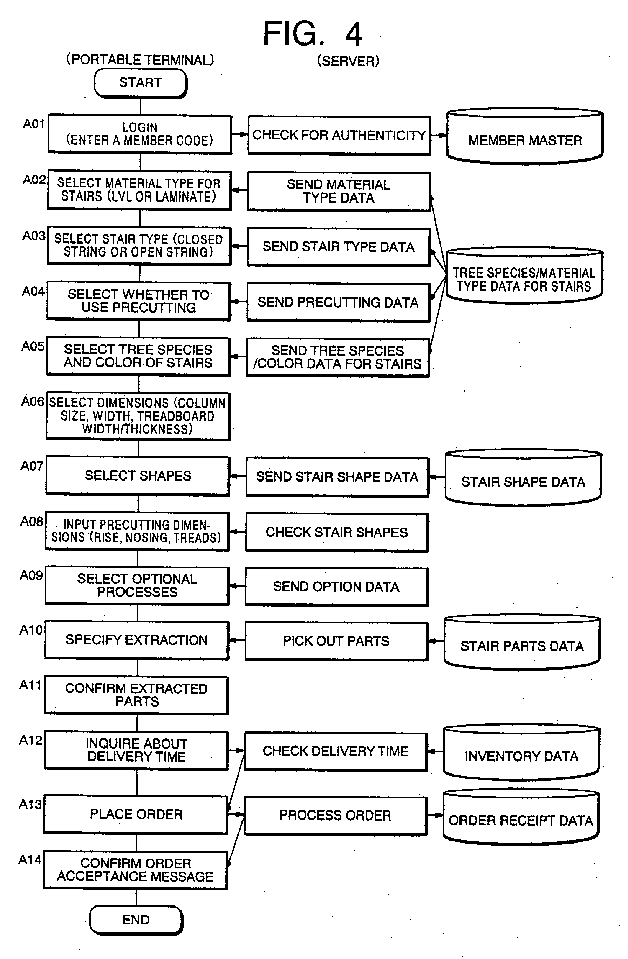

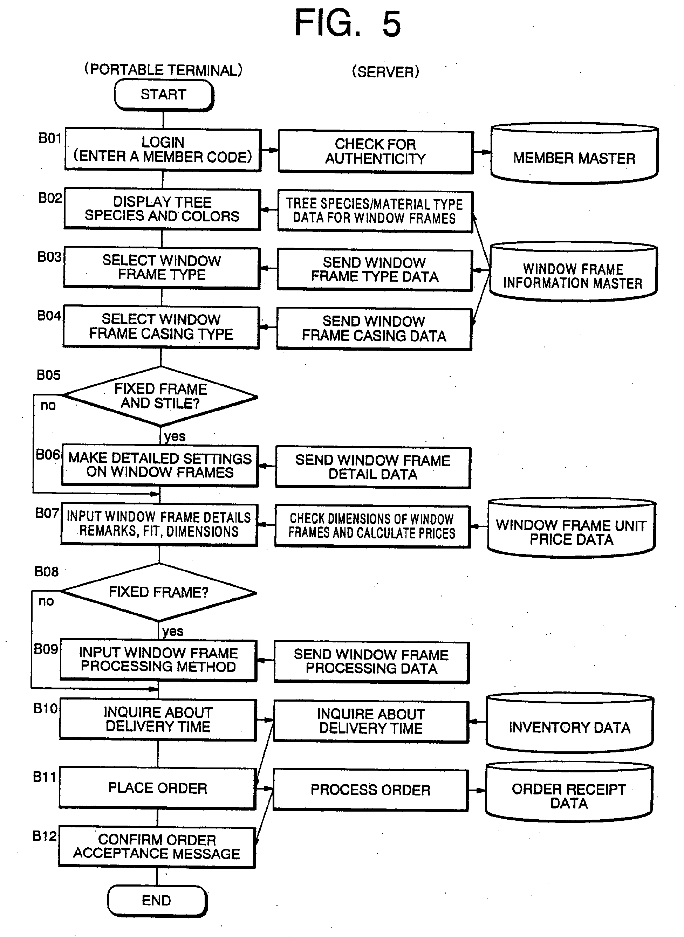

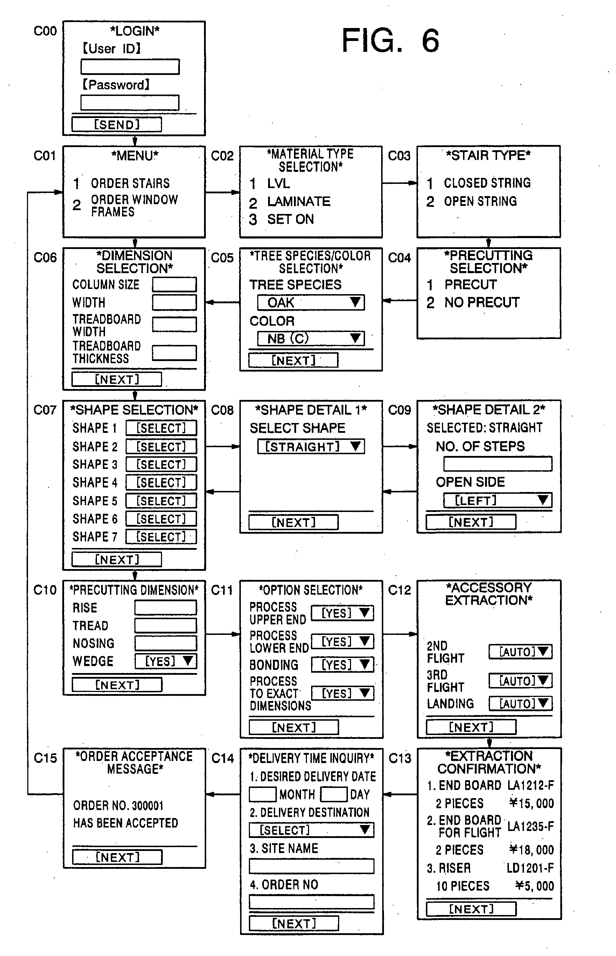

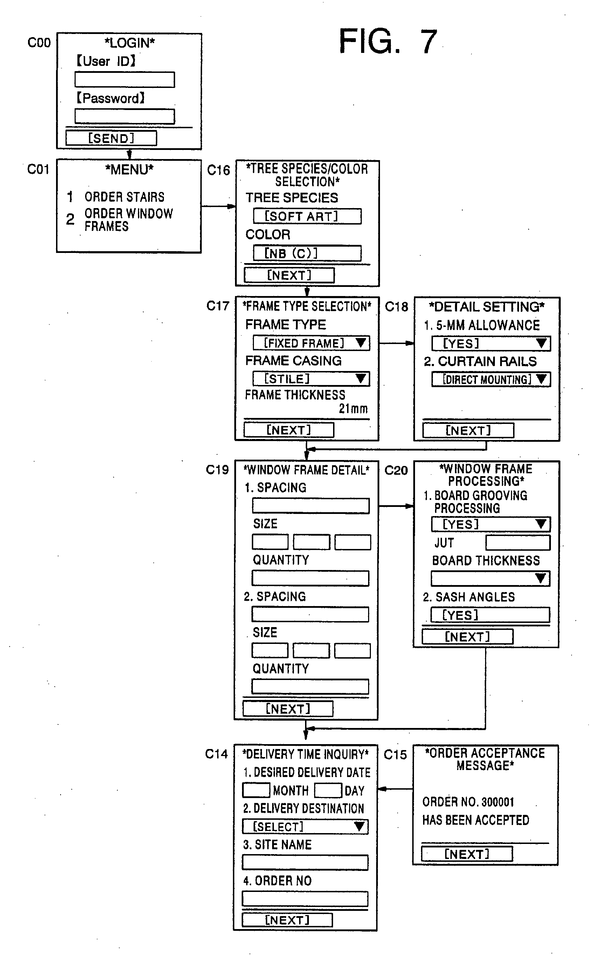

Next, details and a concrete example of an order placement process will be described. FIGS. 4 and 5 are detailed flows of order processing performed between a portable terminal and the server when stairs and window frames are ordered, respectively. FIGS. 6 and 7 show explanatory diagrams illustrating exemplary sequences (successions) of portable terminal screens operated in order placement processes for stairs and window frames, respectively.

First, a concrete example of an order placement process for stairs will be described. The concrete example of an order placement process for stairs will be described with reference to FIGS. 4 and 6. A01 to A14 in FIG. 4 are step numbers of terminal operations while C00 to C15 in FIG. 6 are identification numbers of screens. Now, description will be given below about operations of the order placement process for stairs with reference to screens C00 to C15 in FIG. 6 and according to the flow in FIG. 4.

A01: A customer establishes connection between a portable terminal and the server, enters a member code and password in a Login screen (C00), and sends them. The server checks the received member code and password for authenticity against registration information in a member master. When authenticity is established, the server sends a Menu screen (C01) to the portable terminal of the customer.

A02: The customer on the portable terminal selects [1. Order Stairs] from the Menu screen (C01). In response to the selection of Order Stairs, the server sends a Material Selection screen (C02) for stairs and material type information to the portable terminal. The material type information here contains LVL, Laminate, and Set On. The customer selects one of the material types on the Material Selection screen (C02).

A03: In response to the selection of a material type by the customer, the server sends a Stair Type screen (C03) and stair type data to the portable terminal. In the example in the figure, there are two types of stair, i.e. Closed String Type and Open String Type. The customer selects either of the stair types on the Stair Type screen (C03).

A04: In response to the selection of a stair type by the customer, the server sends a Precutting Selection screen (C04) and precutting data to the portable terminal. The precutting data contains two choices, i.e. Precut and No Precut. The customer selects either Precut or No Precut on the Precutting Selection screen (C04).

A05: In response to the selection by the customer as to whether to use precutting or not, the server sends a Tree Species/Color Selection screen (C05) and tree species/color data for stairs to the portable terminal. The tree species data contains a list of trees such as oak while the color data contains a list of colors such as NB (C). The customer selects appropriate options from the lists of tree species and colors on the Tree Species/Color Selection screen (C05).

A06: As the customer finishes selecting a tree species and color and clicks [Next], the server sends a Dimension Selection screen (C06). Stair dimensions which can be specified on the Dimension Selection screen (C06) include Column Size, Width, Treadboard Width, and Treadboard Thickness. After specifying these dimensions, the customer, clicks [Next].

A07: The server sends a Shape Selection screen (C07) and stair shape data to the portable terminal. The stair shape here means the shape of an entire stairway such as straight, geometrical, or spiral. Depending on the complexity of the stair shape, the customer structurally divides the stairway and specify the shape of each segment by selecting from Shapes 1 to 7 on the Shape Selection screen (C07). In a case that there is no need to divide the stairway as in the case of a straight stairway, only Shape 1 is selected. In response to the selection of shapes on the Shape Selection screen (C07), the server sends a Shape Detail 1 screen (C08) and Shape Detail 2 screen (C09) as subscreens one after another to allow the customer to specify details of shapes. In the example in the figure, the customer specifies the type of stair shape such as Straight on the Shape Detail 1 screen (C08) and specifies the number of steps and which side --right or left-- of an open string stairway should be open on the Shape Detail 2 screen (C09). When the customer finishes selecting shapes, the customer clicks [Next].

A08: The server checks the specified stair shape and sends a Precutting Dimension Input screen (C10). On this screen, the customer specifies the rise of the stair, dimensions of treads and nosing, and whether or not wedges are necessary for insertion of treadboards. When the customer finishes entering precutting dimensions, the customer clicks [Next].

A09: The server sends an Option Selection screen (C11). On this screen, the customer selects or deselects Process Upper End, Process Lower End, Bonding, and Process To Exact Dimensions as optional processes for treadboards. When the customer finishes specifying optional processes, the customer clicks [Next].

A10: The server sends an Accessory Extraction screen (C12). On this screen, the customer specifies whether to pick out flights and landing parts. When the customer specifies "Auto," the server picks out defaults parts automatically from stair parts data. When the customer finishes specifying accessory extraction, the customer clicks [Next].

A11: The server sends an Extraction Confirmation screen (C13). The screen displays a list of extracted parts. When the customer finishes confirming the extracted parts, the customer clicks [Next].

A12: The server sends a Delivery Time Inquiry screen (C14). On this screen, the customer specifies Desired Delivery Date, Delivery Destination, Site Name, and Order No. When the customer specifies order placement by clicking [Next], the server checks by referring to the inventory data whether it is possible to meet the delivery time specified by the customer.

A13: In a case that the server finds by checking the delivery time that delivery can be made in time, it processes the order and files the data entered by the customer, as order receipt data.

A14: The server sends an Order Acceptance Message screen (C15) and displays a message on the portable terminal, stating that the order has been accepted. When the customer clicks [Menu], the server brings back the Menu screen (C01).

Next, a concrete example of an order placement process for window frames will be described. The concrete example of an order placement process for window frames will be described with reference to FIGS. 5 and 7. As in the case of FIGS. 4 and 6 described above, B01 to B12 in FIG. 5 are step numbers of terminal operations and C00 to C20 in FIG. 7 are identification numbers of screens. Now, description will be given below about operations of the order placement process for window frames with reference to screens C00 to C20 in FIG. 7 and according to the flow in FIG. 5.

B01: A customer establishes connection between a portable terminal and the server, enters a member code and password in a Login screen (C00), and sends them. The server checks the received member code and password for authenticity against registration information in a member master. When authenticity is established, the server sends a Menu screen (C01) to the portable terminal of the customer.

B02: The customer on the portable terminal selects [2. Order Window Frames] from the Menu screen (C01). In response to the selection of Order Window Frames, the server sends a Tree Species/Color Selection screen (C16) for window frames as well as tree species, material type, and color data to the portable terminal with reference to a window frame information master. The customer selects a tree species, material type, and color on the Tree Species/Color Selection screen (C16) and clicks [Next].

B03: The server sends a Frame Type Selection screen (C17) to the portable terminal. The customer specifies a frame type such as Fixed Frame on the Frame Type Selection screen (C17).

B04: The customer specifies a window frame casing type such as Stile on the Frame Type Selection screen (C17) and clicks [Next].

B05: The server checks whether the customer has specified Fixed Frame and Stile on the Frame Type Selection screen (C17).

B06: When Fixed Frame and Stile have been specified, the server sends a Detail Setting screen (C18) and detailed data about window frames to the portable terminal. On the Detail Setting screen (C18), the customer specifies whether to add an allowance of 1.5 mm as well as a mounting type of curtain rails. When the customer finishes making settings on the Frame Type Selection screen (C17) and Detail Setting screen (C18), the customer clicks [Next].

B07: The server sends a Window Frame Detail screen (C19) to the portable terminal. On this screen, the customer specifies spacings between window frames as well as sizes and quantities of window frames. The server calculates prices based on the specified window frame sizes.

B08: The server checks whether Fixed Frame has been specified.

B09: When Fixed Frame has been specified, the server sends a Window Frame Processing screen (C20) and window frame processing data to the portable terminal. On this screen, the customer specifies whether or not board grooving processing and sash angles are necessary.

B10: When the customer verifies window frame details and processing details and clicks [Next], the server sends the Delivery Time Inquiry screen (C14). On this screen, the customer specifies Desired Delivery Date, Delivery Destination, Site Name, and Order No. When the customer specifies order placement by clicking [Next], the server checks by referring to the inventory data whether it is possible to meet the delivery time specified by the customer.

B11: In a case that the server finds by checking the delivery time that delivery can be made in time, it processes the order and files the data entered by the customer, as order receipt data.

B12: The server sends an Order Acceptance Message screen (C15) and displays a message on the portable terminal, stating that the order has been accepted. Then, in a case that the customer clicks [Menu], the server brings back the Menu screen (C01).

In the above described concrete example of order processing according to the present invention, any of the screens and programs used for order processing on the portable terminal is supplied by the server as needed. However, the present invention is not limited to this, provided the baud rate and storage capacity of the portable terminal permit.

The present invention allows a customer to access the ordering server from anywhere using a portable terminal (including a portable telephone). Thus, by simple operations on the portable terminal, the customer can make inventory inquiries, inquiries about quotation or order data prepared by themselves or by the manufacturer, or inquiries for checking delivery status.

Also, the present invention makes it easy to take measurements and place orders at a site, and consequently provides the following advantages. Namely, accurate orders can be placed according to site conditions even if there are mistakes in working drawings. Also, since the delivery time of custom-cut materials can be checked at the site, work schedules can be arranged in accordance with the delivery time. Furthermore, since order details can be checked at the site after order placement, any ordering mistake can be corrected quickly.

## Claims

1. An order processing method for commodities with dimensional specifications, the method comprising:
managing commodity data and quotation data in a database at a server being connected with a portable terminal via a network;
sending the commodity data or quotation data from the server to the portable terminal in response to an inquiry from the portable terminal to display the commodity data or quotation data on a screen of the portable terminal;
sending a sequence of ordering screens for commodities which have dimensional specifications from the server to the portable terminal in response to a request from the portable terminal to display the sequence of ordering screens on the screen of the portable terminal; and
placing orders by entering commodity specifications having dimensional specifications according to the sequence of ordering screens displayed on the screen of the portable terminal.

2. An order processing method for commodities with dimensional specifications according to claim 1, wherein the sequence of ordering screens for commodities which have dimensional specifications includes a setting screen for dimensional data.

3. An order processing method for commodities with dimensional specifications according to claim 1, wherein the server prepares quotation data and returns the data to the portable terminal in real time by calculating delivery time and design prices based on the commodity specifications entered by the portable terminal on the ordering screens.

4. An order processing method for commodities with dimensional specifications according to claim 1, wherein the commodities with dimensional specifications are building materials.

5. An order processing method for commodities with dimensional specifications according to claim 4, wherein the building materials include stairs and window frames.

6. An order processing system comprising:
a portable terminal having a screen; and
a server being connected with the portable terminal via a network to receive an order for commodities with dimensional specifications from the portable terminal,
wherein the server further comprises:
means for sending in-stock commodity data or related first quotation data to a portable terminal in response to an inquiry from the portable terminal to display the in-stock commodity data or related first quotation data on the screen of the portable terminal;
means for sending a sequence of ordering screens for commodities which have dimensional specifications to the portable terminal in response to a request from the portable terminal to display the sequence of ordering screens on the screen of the portable terminal; and
means for preparing second quotation data by calculating delivery time and design prices based on the commodity specifications having dimensional specifications entered by the portable terminal to return the second quotation data to the portable terminal in real time.

7. An order processing system according to claim 6, wherein the commodities with dimensional specifications are building materials.

8. An order processing system according to claim 7, wherein the building materials include stairs and window frames.

9. An order processing server for commodities with dimensional specifications, the server comprising:
means for sending commodity data or first quotation data to a portable terminal in response to an inquiry from the portable terminal to display the commodity data or first quotation data on a screen of the portable terminal;
means for sending a sequence of ordering screens for commodities which have dimensional specifications to the portable terminal in response to a request from the portable terminal to display the sequence of ordering screens on the screen of the portable terminal; and
means for preparing second quotation data by calculating delivery time and design prices based on the commodity specifications having dimensional specifications entered by the portable terminal to return the second quotation data to the portable terminal in real time.
